(19) Europäisches Patentamt
European Patent Office
Office européen des brevets

(11) EP 1 901 516 A2

(12) **EUROPEAN PATENT APPLICATION**

(43) Date of publication:
19.03.2008 Bulletin 2008/12

(51) Int Cl.:
*H04L 27/38* (2006.01)

(21) Application number: 07006995.0

(22) Date of filing: 03.04.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 12.09.2006 US 531105

(71) Applicant: Broadcom Corporation
Irvine, CA 92618-7013 (US)

(72) Inventors:
• Conroy, Johannes Hendrik
Irvine, California 92618-7013 (US)

• Swarts, Francis
Irvine, California 92618-7013 (US)
• Kent, Mark
Irvine, California 92618-7013 (US)
• Landau, Uri
Irvine, California 92618-7013 (US)

(74) Representative: Jehle, Volker Armin
Bosch Graf von Stosch Jehle
Patentanwaltsgesellschaft mbH
Flüggenstrasse 13
80639 München (DE)

(54) **Method and system for estimating signal error in a communication system**

(57) Estimating error signals in a communication system may include determining a frequency error of a received RF signal utilizing a plurality of correlators, where one or more of the correlators may be fed with a carrier frequency of the received RF signal and a remaining portion of the plurality of correlators may be fed with one or more other carrier frequency. This carrier frequency fed to the remaining portion of the plurality of correlators may differ from the carrier frequency of the received RF signal. The received RF signal may comprise a primary synchronization channel (PSC) code for wideband code division multiple access (WCDMA). The carrier frequency of the received RF signal may be rotated in an I and Q coordinate system so as to generate the other carrier frequency.

Fig. 1

EP 1 901 516 A2

## Description

CROSS-REFERENCE TO RELATED APPLICATIONS/
INCORPORATION BY REFERENCE

Not Applicable.

FIELD OF THE INVENTION

Certain embodiments of the invention relate to wireless communication. More specifically, certain embodiments of the invention relate to a method and system for estimating signal error in a communication system.

BACKGROUND OF THE INVENTION

The increased performance and communication capacity of third-generation (3G) wireless systems has generated a growing number of mobile user equipment (UE) for voice, data and multimedia traffic. For example, wideband code division multiple access (WCDMA) is a radio communication specification that enables increased performance by carrying user traffic using complex modulated radio frequency (RF) signals and by performing a number of vital protocol functions for mobile UE and base station operation.

One such function may be initial time-frequency synchronization when establishing connections between the mobile UE and the base station. In order for a mobile UE to communicate with a base station, for example, the mobile UE may search for an available cell and may request a connection. During the cell search, the mobile UE searches for a cell and corresponding base stations, and determines the downlink scrambling code and common channel frame synchronization of that cell. The mobile UE determines the timing of, what is generally known as the cell slot of the primary synchronization channel (P-SCH) code (PSC) of the physical synchronization channel (SCH) to synchronize with the targeted cell. The mobile UE commonly uses a single matched filter to find the P-SCH code by detecting the peak of the filter response in the received signal. To complete the synchronization, in WCDMA, the UE may perform what is generally known as frame synchronization and identification of the code group of the scrambling code. The mobile UE detects the secondary synchronization channel (S-SCH) code (SSC) of the PSC in the received signal and correlates it with all possible secondary synchronization code sequences. The frame synchronization is determined by the maximum correlated value. After slot and frame synchronization are achieved, the mobile UE device may perform any other required operations to complete the network connection.

To achieve time synchronization between the mobile UE and a base station when establishing connections during power up operations, for example, the mobile UE may need to lock to a reference frequency provided by the base station. In most instances, the mobile UE utilizes a local voltage controlled oscillator, such as a crystal oscillator, that is used to generate a carrier frequency for the RF and analog portions of the device and to generate a reference digital clock for the digital portion of the device. When a high quality crystal oscillator is utilized, the frequency uncertainty or frequency offset of the crystal oscillator may be very small, and with proper calibration operations, the crystal oscillator may be enabled to generate the appropriate carrier frequency and/or digital clock signals for time-synchronization during power up operations, for example. However, the cost of the high quality crystal oscillator and the expense associated with the calibration operations may be prohibitively high. In this regard, lower quality crystal oscillators that possess larger frequency uncertainty may be necessary in order to meet cost requirements. However, the use of lower quality crystal oscillators increases the time it takes to lock to the reference frequency provided by the base station. In certain instances, this increased time may result in various synchronization problems.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A system and/or method is provided for estimating signal error in a communication system, substantially as shown in and/or described in connection with at least one of the figures, as set forth more completely in the claims.

According to an aspect of the invention, a method is provided for estimating signal error in a communication system, the method comprising: determining a frequency error of a demodulated received RF signal utilizing a plurality of correlators, wherein at least one of said plurality of correlators is fed with a carrier frequency that is different from a carrier frequency of said demodulated received RF signal.

Advantageously, said demodulated received RF signal comprises a primary synchronization channel (PSC) code for wideband code division multiple access (WCDMA).

Advantageously, the method further comprises rotating said carrier frequency of said demodulated received RF signal in a I and Q coordinate system thereby generating said at least one other carrier frequency.

Advantageously, the method further comprises generating a correlation result for each of said plurality of correlators and comparing said correlation results to determine said frequency error of said demodulated received RF signal.

Advantageously, the method further comprises adjusting a VCO frequency in response to said frequency error.

Advantageously, the method further comprises adjusting a rotational frequency of a rotator in response to said frequency error.

Advantageously, the method further comprises selecting one of a plurality of rotators in response to said frequency error.

Advantageously, the method further comprises storing a correlation result from said at least one of said correlators in a first portion of memory and storing correlation results from said remaining portion of said correlators in at least some of a remaining portion of said memory.

Advantageously, the method further comprises storing data other than correlation results in said at least some of a remaining portion of said memory when said correlation results from said remaining portion of said correlators are no longer needed.

Advantageously, said plurality of correlators comprise PSYNC correlators.

According to an aspect of the invention, a machine-readable storage is provided having stored thereon, a computer program having at least one code section for signal error in a communication system, the at least one code section being executable by a machine for causing the machine to determine a frequency error of a demodulated received RF signal utilizing a plurality of correlators, wherein at least one of said plurality of correlators is fed with a carrier frequency that is different from a carrier frequency of said demodulated received RF signal.

Advantageously, said demodulated received RF signal comprises a primary synchronization channel (PSC) code for wideband code division multiple access (WCDMA).

Advantageously, the machine-readable storage further comprises code for rotating said carrier frequency of said demodulated received RF signal in a I and Q coordinate system thereby generating said at least one other carrier frequency.

Advantageously, the machine-readable storage further comprises code for generating a correlation result for each of said plurality of correlators and comparing said correlation results to determine said frequency error of said demodulated received RF signal.

Advantageously, the machine-readable storage further comprises code for adjusting a VCO frequency in response to said frequency error.

Advantageously, the machine-readable storage further comprises code for adjusting a rotational frequency of a rotator in response to said frequency error.

Advantageously, the machine-readable storage further comprises code for selecting one of a plurality of rotators in response to said frequency error.

Advantageously, the machine-readable storage further comprises code for storing a correlation result from said at least one of said correlators in a first portion of memory and storing correlation results from said remaining portion of said correlators in at least some of a remaining portion of said memory.

Advantageously, the machine-readable storage further comprises code for storing data other than correlation results in said at least some of a remaining portion of said memory when said correlation results from said remaining portion of said correlators are no longer needed.

Advantageously, said plurality of correlators comprise PSYNC correlators.

According to an aspect of the invention, a system is provided for estimating signal error in a communication system, the system comprising circuitry for determining a frequency error of a demodulated received RF signal utilizing a plurality of correlators, wherein at least one of said plurality of correlators is fed with a carrier frequency that is different from a carrier frequency of said demodulated received RF signal.

Advantageously, said received demodulated RF signal comprises a primary synchronization channel (PSC) code for wideband code division multiple access (WCDMA).

Advantageously, the system further comprises circuitry for rotating said carrier frequency of said demodulated received RF signal in a I and Q coordinate system thereby generating said at least one other carrier frequency.

Advantageously, the system further comprises circuitry for generating a correlation result for each of said plurality of correlators and comparing said correlation results to determine said frequency error of said demodulated received RF signal.

Advantageously, the system further comprises circuitry for adjusting a VCO frequency in response to said frequency error.

Advantageously, the system further comprises circuitry for adjusting a rotational frequency of a rotator in response to said frequency error.

Advantageously, the system further comprises circuitry for selecting one of a plurality of rotators in response to said frequency error.

Advantageously, the system further comprises circuitry for storing a correlation result from said at least one of said correlators in a first portion of memory and storing correlation results from said remaining portion of said correlators in at least some of a remaining portion of said memory.

Advantageously, the system further comprises circuitry for storing data other than correlation results in said at least some of a remaining portion of said memory when said correlation results from said remaining portion of said correlators are no longer needed.

Advantageously, said plurality of correlators comprise PSYNC correlators.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

Fig. 1 is a block diagram of an exemplary communication system in which a WCDMA mobile device attempts to synchronize with a base station in order to estimate signal error, in accordance with an embodiment of the invention.

Fig. 2 is a block diagram of an exemplary system for estimating signal error in a communication system, in accordance with an embodiment of the invention.

Fig. 3 is block diagram of the ACD/CMF block, in accordance with an embodiment of the invention.

Fig. 4 is a block diagram of exemplary rotators, in accordance with an embodiment of the invention.

Fig. 5 illustrates the effects of demodulating the RF signal from the base station with a $F_{VCO}$ that is offset from the carrier frequency of the RF signal, in accordance with an embodiment of the invention.

Fig. 6 is a block diagram of an exemplary PSYNC correlator, in accordance with an embodiment of the invention.

Fig. 7 is a flow diagram illustrating exemplary steps in the processing of P-SCH data, in accordance with an embodiment of the invention.

DETAILED DESCRIPTION OF THE INVENTION

Certain embodiments of the invention may be found in a method and system for estimating error signals in a communication system. Exemplary aspects of the invention may comprise determining a frequency error of a received RF signal utilizing a plurality of correlators, where one or more of the correlators may be fed with a carrier frequency of the received RF signal and a remaining portion of the correlators may be fed with one or more other carrier frequency. This carrier frequency fed to the remaining portion of the received correlators may differ from the carrier frequency of the received RF signal. The received RF signal may comprise a primary synchronization channel (PSC) code for wideband code division multiple access (WCDMA). The carrier frequency of the received RF signal may be rotated in an I and Q coordinate system so as to generate the other carrier frequency.

A correlation result may be generated for each of the plurality of correlators and the generated results may be compared to determine the frequency error of the received RF signal. The determined frequency error may, for example, be used to adjust a VCO frequency. Alternatively, the determined frequency error may be used to adjust the rotational frequency of a rotator or select a rotator from among a plurality of rotators each with, for example, fixed rotation frequencies. In accordance with an embodiment of the invention, a correlation result from one or more of the correlators may be stored in a first portion of memory and correlation results from the remaining portion of the correlators may be stored in at least some of a remaining portion of the memory.

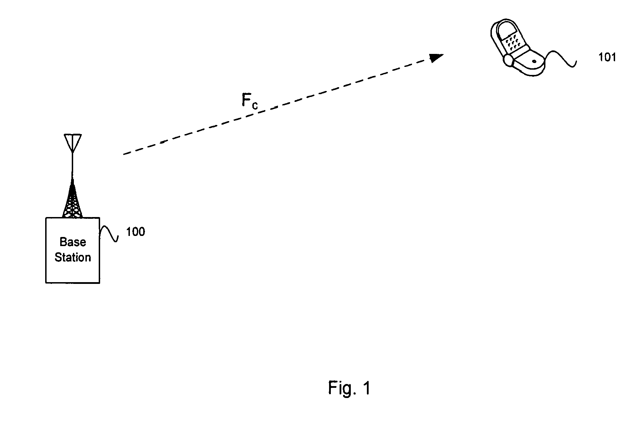

Fig. 1 is a block diagram of an exemplary communication system in which a WCDMA mobile device attempts to synchronize with a base station in order to estimate signal error, in accordance with an embodiment of the invention. Referring to Fig. 1, there is shown a base station 100 with a carrier frequency Fc and WCDMA mobile device 101.

In operation, the mobile device 101 may attempt initial synchronize with base station 100 during an initial cell search. The mobile device 101 may not know the exact carrier frequency of the base station 100. Therefore, during initial synchronization the mobile device 101 may choose an initial frequency that may be within a particular tolerance of the base station 100 carrier frequency. The mobile device 101 may then demodulate the base station signal using this initial frequency down to a baseband frequency. The mobile device 101 may then ascertain the error between the initial frequency and the base station 100 carrier frequency. This error may be used to adjust the initial frequency used by the mobile device 101 for future operations.

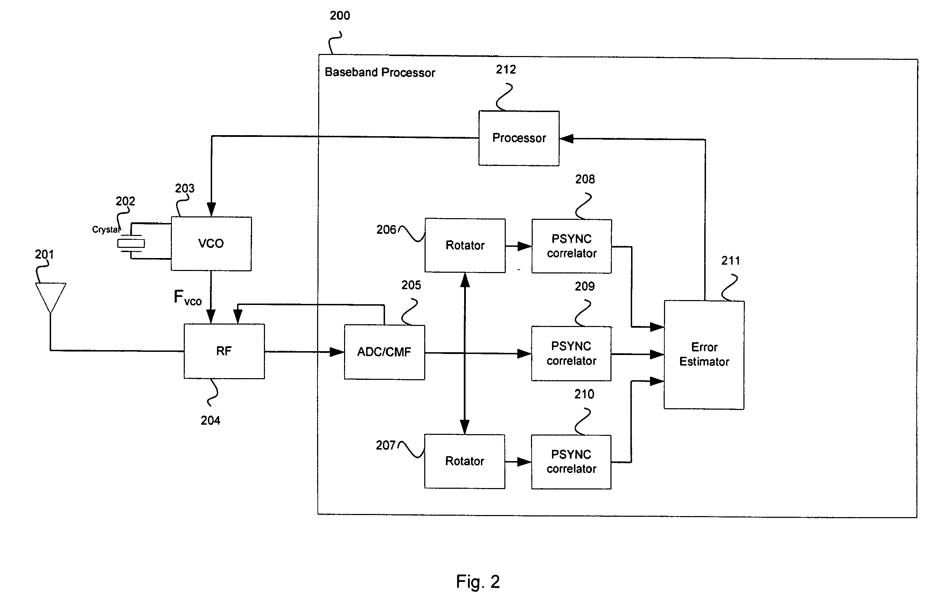

Fig. 2 is a block diagram of an exemplary system for estimating signal error in a communication system, in accordance with an embodiment of the invention. Referring to Fig. 2, there is shown an RF/analog portion that may comprise an antenna 201, an RF block 204, a voltage controlled oscillator (VCO) 203, and a crystal 202. There is also shown a baseband processor (BB) portion 200 that may comprise an analog-to-digital (A/D) converter/chip matched filter (ADC/CMF) block 205, rotators 206 and 207, PSYNC correlator 208, 209, 210, an error estimator block 211, and a processor 212. Fig. 2 may be a portion of WCDMA mobile device 101.

The antenna 201 may comprise suitable logic and/or circuitry that may enable communicating with at least one base station 100. Communication with the base station 100 may comprise receiving data via a physical synchronization channel (SCH) specified by the WCDMA requirements. In this regard, the WCDMA mobile device 101 may receive a primary synchronization code (PSC) via a primary synchronization channel (P-SCH) and secondary synchronization codes (SSCs) via a secondary synchronization channel (S-SCH), for example. Synchronization codes are transmitted by the network to indicate slot and frame timing to the WCDMA mobile device 101. The P-SCH channel may be used for initial network synchronization with a WCDMA compliant UE, such as the WCDMA mobile device 101, for example.

The RF block 204 may comprise suitable logic, circuitry, and/or code for demodulating RF signals received from antenna 201 into baseband signals that may be transferred to a baseband processor 200 for further processing. The RF block 204 may utilize $F_{VCO}$, generated by the VCO 203 to demodulate the received RF signals. The VCO 203 may comprise suitable logic, circuitry, and/or code that may enable generation of an output signal that enables the RF block 204 to demodulate the RF signals received from the antenna 201. The frequency of this signal, $F_{VCO}$, may need to be within a certain tolerance for proper operation of the RF block 204. The VCO 203 may utilize crystal 202 to produce a signal with frequency $F_{VCO}$. It may be necessary to adjust the VCO 203 via the processor 212 so that the RF block 204 may demodulate a plurality of carrier frequencies.

The ADC/CMF block 205 may comprise suitable logic, circuitry, and/or code for digitizing the demodulated RF signals/baseband signals generated from the RF block 204 as well as suitable logic, circuitry, and/or code for match filtering of the digitized baseband signal. The ADC/CMF block may digitize the demodulated RF signals/baseband signals and output an in-phase (I) and quadrature-phase (Q) representation, collectively (I/Q), of the digitized signals to the rotator blocks 206 and 207. The baseband processor 200 may comprise suitable logic, circuitry, and/or code that may enable further processing of the digitized baseband signals.

The rotator blocks 206 and 207 may comprise suitable logic, circuitry and/or code for rotating the signal received from the ADC/CMF 205. The rotators 206 and 207 may effectively shift the frequency spectrum of the signal received from the ADC/CMF 200 by rotating the I/Q data received from the ADC/CMF 200 in the I/Q domain. The amount of shifting may be pre-programmed into the rotators 206 and 207 by the processor 212. For example, one of the rotators 206 and 207 may be pre-programmed so that its output frequency is higher than the original baseband frequency and the other rotator may be pre-programmed so that its output frequency is lower than the original baseband frequency. The output of the rotators 206 and 207 may also be in an I/Q format and may be subsequently sent to the PSYNC correlators 208 and 210 for further processing.

The PSYNC correlators 208,209, and 210 may comprise suitable logic, circuitry, and/or code that may enable processing of primary synchronization codes from the primary synchronization channel in order to synchronize the WCDMA mobile device with a base station in the cellular network, for example. The PSYNC correlators 208 and 210 may receive I/Q data from the rotators 206 and 207 respectively.

The PSYNC correlators 208, 209, and 210 may generate the result values of searching 5120 time locations of a certain frequency grid point. The PSYNC correlators 208, 209, and 210 may enable generating a signal peak value, $P_{MAX}$, and a floor-noise-average value, $P_N$, for a primary synchronization code received while dwelling on a given frequency, for example. This process may be repeated for various carrier frequencies. The signal peak value, $P_{MAX}$, and a floor-noise-average value, $P_N$, may be utilized by the baseband processor 200 to detect the primary synchronization codes and establish initial synchronization with the cellular network. The PSYNC correlators 208, 209, and 210 may be utilized by the WCDMA mobile device 101 for detecting frequencies during frequency searching operations, for example. Moreover, the PSYNC correlators 208, 209, and 210 may be utilized to test and determine the offset frequency of the crystal 202 that may be attached to the VCO 203.

The error estimator 211 may comprise suitable logic, circuitry, and/or code that may enable determining how far off $F_{VCO}$ is from the ideal frequency for demodulating the RF signal received at the antenna 201. The error estimator 211 may accomplish this by evaluating the signals $P_{MAX}$ and $P_N$ from the PSYNC correlators 208, 209, 210 to determine a correlation result for each of the PSYNC correlators 208, 209, 210. The error estimator 211 may then determine the frequency error in $F_{VCO}$ by interpolating the correlation results. This estimated frequency error may then be used to adjust parameters within the VCO 203 accordingly so that, for example, the PSYNC correlator with the unrotated input 209 ultimately becomes the most correlated PSYNC.

In operation, RF signals from the base station 100 are received by the antenna 201 and are communicated to the RF block 204. The RF block 204 may demodulate the received RF signals based on $F_{VCO}$ generated by the VCO 204 down to a baseband signal. The demodulated signal may be shifted above $F_{VCO}$ and below $F_{VCO}$ through rotators 206 and 207. The original baseband signal demodulated with $F_{VCO}$ and the rotated versions of the baseband signal may be fed into separate the plurality of PSYNC correlators 208, 209, and 210. The error estimator 211 determines which of the plurality of PSYNC correlators 208, 209, and 210 is most correlated and communicates this to the processor 212. The processor 212 in turn adjusts the VCO 203 until the PSYNC correlators 209 directly connected to the ADC/CDF block 205 is the most correlated and the process stops. Once synchronization has finished, the PSYNC correlators 208 and 210 may no longer be necessary and their resources may be used for other purposes.

The frequency offset of $F_{VCO}$ may be directly related to the quality of the crystal 202 and the VCO 203. For instance, if a voltage controlled temperature compensated crystal oscillator (VCTXO) is used, the frequency offset may be relatively small. By contrast, if a non-temperature compensated VCO is used, the frequency offset may be relatively large. In general, VCTXOs are comparatively more expensive than non-temperature compensated VCOs, however. By replicating the baseband signal above and below the center frequency of the original baseband signal and using multiple PSYNC correlators to detect the primary synchronization code the problems associated with the lower quality crystal may be mitigated and the cost for the system may therefore be reduced.

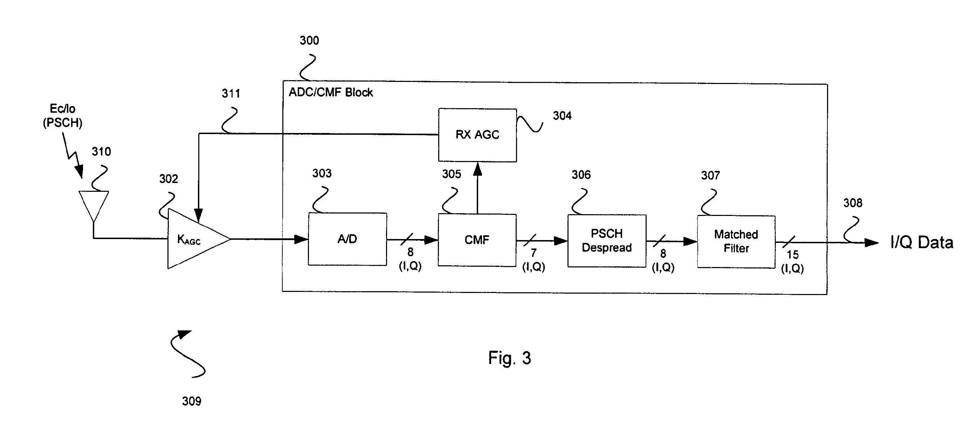

Fig. 3 is block diagram of the ACD/CMF block, in accordance with an embodiment of the invention. Referring to Fig. 3, there is shown a data path 309 corresponding to a portion of WCDMA mobile device 101 that processes data received via the primary synchronization channel (P-SCH). In this regard, the data path 309 may correspond to a portion of the WCDMA mobile device 101 described in Fig. 1, for example. The data path 309 may comprise an antenna 310, an amplifier 302, an analog-to-digital (A/D) converter 303, a chip matching filter (CMF) 305, a receiver (Rx) automatic gain controller (AGC) 304, a primary synchronization channel (P-SCH) despreader 306, and a matched filter 307.

The antenna 310 may comprise suitable logic and/or circuitry that may enable receiving P-SCH data and may facilitate measurements of the primary sync power density, Ec, the interference power density level at the antenna, loc, the power density at the antenna of a received path, lor, and/or the total RF power or total received power spectral density, lo, where lo = loc + lor.

The amplifier 302 may comprise suitable logic, circuitry, and/or code that may be utilized to increase or decrease the received signal strength based on a feedback signal 311 provided by the Rx AGC 304. The A/D converter 303 may comprise suitable logic, circuitry, and/or code that may enable digitization of the output of the amplifier 302 to generate the signal $RX_{A2D}$. The signal $RX_{A2D}$ may comprise 8-bit in-phase (I) and quadrature (Q) signals, for example.

The CMF 305 may comprise suitable logic, circuitry, and/or code that may enable match filtering of the output signals generated by the A/D converter 303. The CMF 305 may be utilized to generate at least one signal that may be utilized by the Rx AGC 304 to generate the feedback signal 311 to the amplifier 302. The CMF 305 may generate a signal $RX_{CMF}$ that may comprise 7-bit I/Q signals, for example. The P-SCH despreader 306 may comprise suitable logic, circuitry, and/or code that may enable despreading of the $RX_{CMF}$ signal to generate the $RX_{DS}$ signal as input to the matched filter 307. The $RX_{DS}$ signal may comprise 8-bit I/Q signals, for example. The matched filter 307 may comprise suitable logic, circuitry, and/or code that may enable match filtering or correlation of the $RX_{DS}$ signal to generate a correlated signal that may comprise 15-bit I/Q signals, for example. The P-SCH code may be repeated by the base station at every slot, for example. A slot period, according to the WCDMA standard, may consist of 2560 chips, where the duration of a chip is 1/3.84e6 sec. In this regard, 5120 correlation values, that is, twice per chip time, may be generated. Each of the generated correlation values may be associated with the hypothesis that the slot boundaries are located at that point. As a result, the 5120 correlation values may represent 5120 hypotheses for the boundaries of a slot to be located anywhere within time period of 2560-chips.

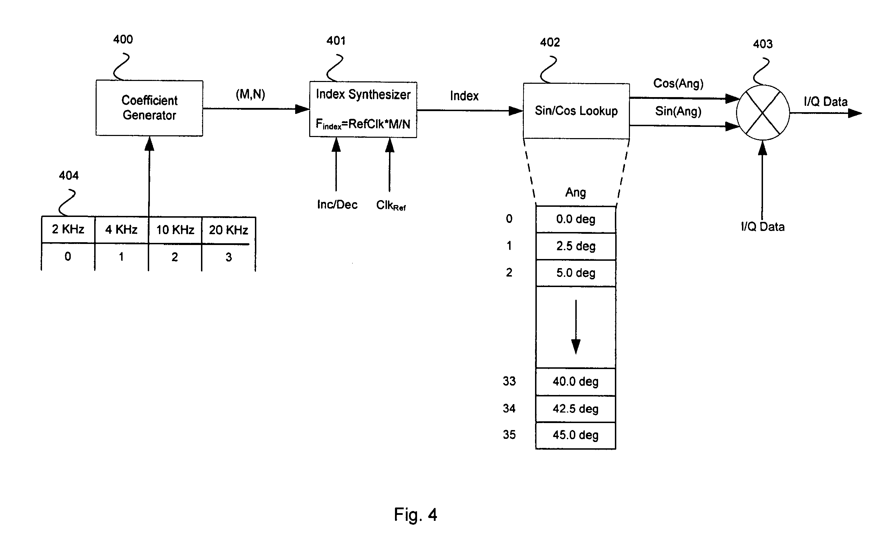

Fig. 4 is a block diagram of exemplary rotators, in accordance with an embodiment of the invention. Referring to Fig. 4, there is shown a coefficient generator 400, an index synthesizer 401, a sin/cos lookup table 402 and a multiplier 403.

The Coefficient generator 400 may comprise suitable logic, circuitry and/or code for generating coefficients M and N in response to a rotation frequency selection 404. For example, rotation frequency selection one (1) corresponds to a rotation frequency of 4 KHz. If this value is selected, the coefficient generator may select the appropriate values for M and N such that a rotator inserts a 4 KHz rotation into the signal. These values may then be output to an index synthesizer.

The index synthesizer 401 may comprise suitable logic, circuitry and/or code for generating an index for a lookup table where the index changes over time at a frequency corresponding to a function of coefficients M, N, $Clk_{Ref}$, and the Inc/Dec signal. For example, the value of the index may cycle through the values 0, 1, 2, ... , 33, 34, 35 at a rate of $F_{index} = \dfrac{M \bullet Clk_{ref}}{N}$ and then repeat. The values of the index may be used to select a value from a lookup table. The Inc/Dec signal may be used to change the direction of rotation by changing the direction of the index output from incrementing to decrementing.

The sin/cos lookup 402 may comprise suitable logic, circuitry and/or code for storing several values in a lookup table and for computing the sin and cos of one of the several values stored based on an index. For example, the lookup table may store the values 0.0, 2.5, 5.0,... 40.0, 42.5, 45.0. If for example, the index value was three (3) the sin/cos lookup 402 may output *Cos* (5.0°) and *Sin*(5.0°).

The multiplier 403 may comprise suitable logic, circuitry, and/or code for multiplying a sin and cos signal input with and I/Q data input and for outputting the result of the multiplication. For example, the multiplier 403 may multiply the Cos and Sin output of the sin/cos lookup 402 with the I/Q data output of the ADC/CMF block 300. The result of the multiplication may become the input to the PSYNC correlators coupled to the rotator 208 or 210.

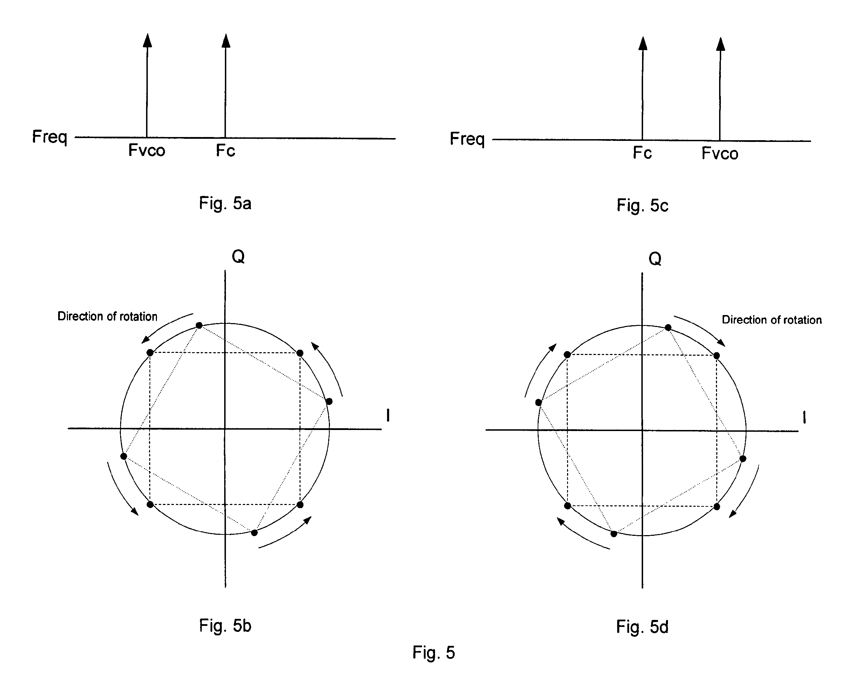

Fig. 5 illustrates the effects of demodulating the RF signal from the base station with a $F_{VCO}$ that is offset from the carrier frequency of the RF signal, in accordance with an embodiment of the invention. In operation, the rotators 206 and 207 in Fig. 2 may receive I/Q data via from the ADC/CMF 205 (Fig. 2) that is representative of the baseband signal as demodulated by RF block 204 (Fig. 2). When the RF signal received by the RF block 204 (Fig. 2) is demodulated by an $F_{VCO}$ that does not match the carrier frequency of the RF signal the result may be a continuous clockwise rotation Fig. 5d or continuous counter clockwise rotation Fig. 5b, in the I/Q domain of the baseband signal. The rotators 206 and 207 may compensate for this continuous rotation by applying a constant rotation to the I/Q data received in an opposite direction. Reducing the rotation of the I/Q data may facilitate detection by a PSYNC correlator 208 and 210.

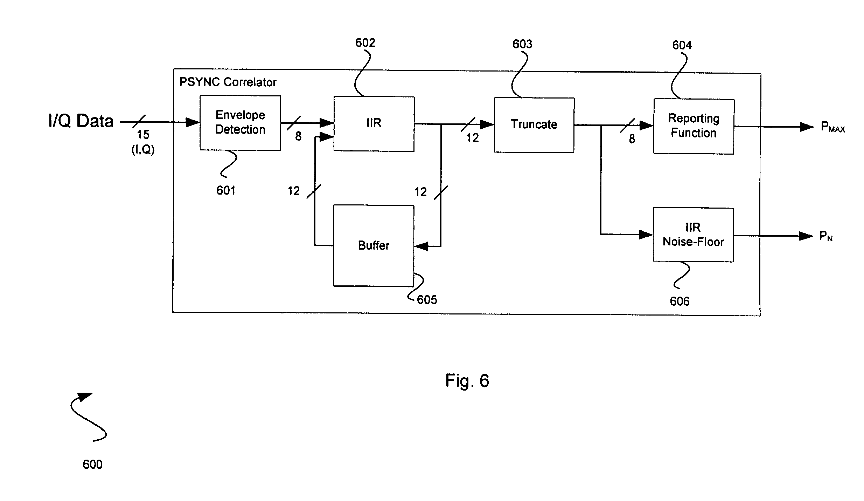

Fig. 6 is a block diagram of an exemplary PSYNC correlator, in accordance with an embodiment of the invention. Referring to Fig. 6, there is shown an envelope detector 601, an infinite impulse response (IIR) filter 602, a buffer 605, a truncation block 603, a reporting function block 604, and an IIR noise-floor block 606. The data path 600 may correspond to a portion of the WCDMA mobile device 101 (Fig. 1), for example.

The envelope detector 601 may comprise suitable logic, circuitry, and/or code that may enable generation of a signal by detecting the measured envelope of the in-phase and quadrature signals generated by the matched filter 307 (Fig. 3) at twice per a chip time. The output of the envelope detector 601 may be an 8-bit signal, for example, that may be communicated to the IIR filter 602.

The IIR filter 602 may comprise suitable logic, circuitry, and/or code that may enable digital filtering of the signal received from the envelope detector 601. In this regard, the $n^{th}$ magnitude or envelop of the correlation output that is input to the IIR filter 602 may be filtered with the magnitude $(n-5120)^{th}$ that may be stored in the buffer 605. The new filter output may then be stored in buffer 605, therefore maintaining the updated outcome for each of the 5120 hypotheses. The filtering process may be cast as a filtering of 5120 signals. Results from the IIR filter 602 may be transferred to the truncation block 603 and/or to the buffer 605 in 12-bit words, for example.

The buffer 605 may comprise suitable logic, circuitry, and/or code that may enable storage of filtered data and to feed back stored filtered data to the IIR filter 602. The buffer 605 may be implemented using a random access memory (RAM).

The truncation block 603 may comprise suitable logic, circuitry, and/or code that may enable truncation of the digital output of the IIR filter 602 into a predetermined number of bits. For example, the truncation block 603 may truncate 12-bit words into 8-bit words for processing by the reporting function block 604 and the IIR noise-floor block 606.

The reporting function block 604 may comprise suitable logic, circuitry, and/or code that may enable generation of signal peak values, $P_{MAX}$, for primary synchronization codes that have been determined by operations performed by the data paths 309 and 600 for various frequencies.

The IIR noise-floor block 606 may comprise suitable logic, circuitry, and/or code that may enable generation of floor-noise-average values, $P_N$, for primary synchronization codes that have been determined by operations performed by the data paths 309 and 600 for various frequencies.

In operation, the PSYNC correlators 208, 209, and 210 may enable measuring of the noise power and the peak power of the entire 5120 hypotheses and combining or filtering of the current measurement of, for example, hypothesis n with a measurement n + 5120, where n may correspond to a counter value associated with each measurement. The signal peak values, $P_{MAX}$, and the floor-noise-average values, $P_N$, may be utilized by the error estimation block 211 (Fig. 2) in the baseband processor 200 (Fig. 2) to determine which of the PSYNC correlators 208, 209, and 210 in Fig. 2 is most correlated and that in turn may be used to determine the frequency offset of $F_{VCO}$ from VCO 203 (Fig. 2). For example, the processor 212 (Fig. 2) may generate a plurality of control signals to vary the frequency of the crystal oscillator in response to the output of the error estimation block 211 and therefore modify the carrier frequency applied to the RF block 204 (Fig. 2). A signal peak-to-noise-floor-average ratio may be determined for each of the carrier frequencies generated. The corresponding digital control signal may then be utilized to generate the appropriate carrier frequency that may be utilized for synchronization with the network during power up operations.

Once synchronization is complete, the resources of a PSYNC correlator may not be needed in which case the resources may be reallocated. For example, the processor 212 may store other data in a portion of the buffer 605 of an unused PSYNC correlators.

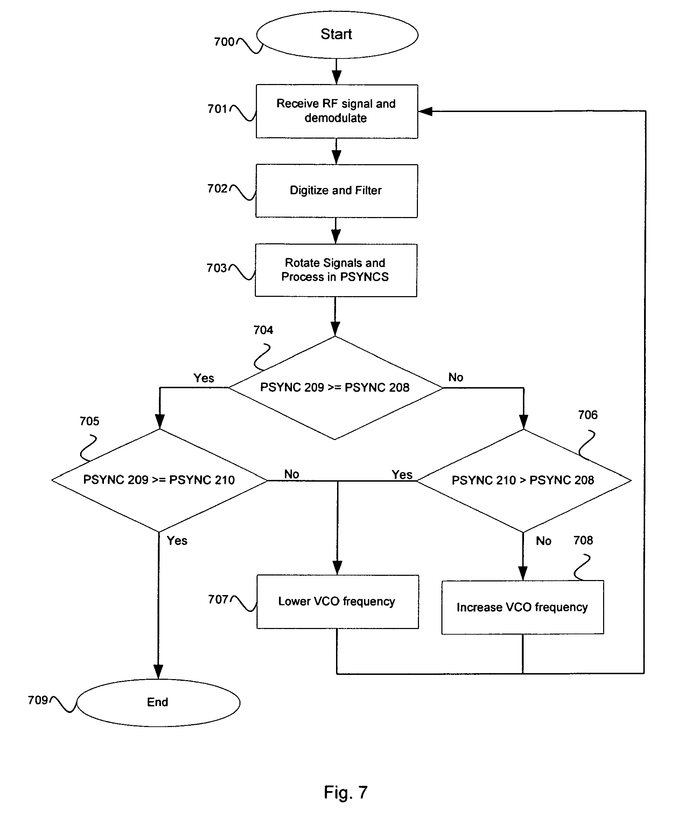

Fig. 7 is a flow diagram illustrating exemplary steps in the processing of P-SCH data, in accordance with an embodiment of the invention. Referring to Fig. 7, there is shown a flow diagram comprising a start step 700. In step 701, The RF signal may be received and demodulated based on initial VCO frequency $F_{VCO\_0}$. In step 702, the demodulated signal may be passed through the ADC/CMF 205 (Fig. 2) where it may be digitized and filtered. In step 703, the output of the ADC/CMF 205 (Fig. 2) may be split into a plurality of paths. A first path may be coupled to a first PSYNC correlator 209 (Fig. 2). A second path may be coupled to a first rotator 206 (Fig. 2), which may be coupled to a second PSYNC correlator 208 (Fig. 2). A third path may be coupled to a second rotator 207 (Fig. 2), which may be coupled to a third PSYNC correlator 209 (Fig. 2). At step 703, the error estimator 211 (Fig. 2) may determine which one of the plurality of PSYNC correlators is most correlated.

At step 704, the first PSYNC correlator 209 and the second PSYNC correlator 208 are compared. If the first PSYNC correlator 209 is more correlated than the second PSYNC correlator 208 then the first PSYNC correlator 209 and the third PSYNC correlator 210 may be compared at step 705. If at step 705 the first PSYNC correlator 209 is more correlated than the third PSYNC correlator 210 then no VCO adjustment may be necessary as $F_{VCO}$ may be at the proper frequency. If on the other hand the first PSYNC correlator 209 is less correlated than the third PSYNC correlator 210 at step 705 then $F_{VCO}$ is too high and the VCO 203 may be adjusted at step 707 to lower $F_{VCO}$ and consequently the process beginning from step 701 may be repeated.

Referring back to step 704, if the first PSYNC correlator 209 is less correlated than the second PSYNC correlator 208 then second PSYNC correlator 208 and the third PSYNC correlator 210 may be compared at step 706. If the third PSYNC correlator 210 is more correlated than the second PSYNC correlator 208 then $F_{VCO}$ may be too high and the VCO 203 may be adjusted at step 707 to lower $F_{VCO}$ and consequently the process beginning from step 701 may be repeated. If the third PSYNC correlator 210 is less correlated than the second PSYNC 208, then the $F_{VCO}$ may be too low and VCO 203 may be adjusted at 708 to increase the $F_{VCO}$ and consequently the process beginning from step 701 may be repeated. This process may be repeated until the first PSYNC correlator 209 is the most correlated.

Various aspects of the invention may comprise UE 101 (Fig. 1) channel acquisition in the presence of large frequency uncertainty in WCDMA signals and may result in performing efficient time-frequency search and may be utilized to quantify, that is, estimate, an unknown frequency tolerance, for example. This approach may therefore facilitate an optimal partitioning of an unknown frequency range into a search grid. Such an approach may enable the usage of RF oscillators 203 (Fig. 2), in WCDMA applications, for example, which may have larger tolerance and therefore lower cost. The approach described herein need not be limited to WCDMA applications, and may be generally utilized in communication systems where such problem exists. The approach described herein may result in a cost effective mechanism that enables the use of lower quality crystal oscillator 202 (Fig. 2) in WCDMA mobile user equipments for supporting synchronization operations that are necessary to establish and/or maintain connections with the network.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method for estimating signal error in a communication system, the method comprising: determining a frequency error of a demodulated received RF signal utilizing a plurality of correlators, wherein at least one of said plurality of correlators is fed with a carrier frequency that is different from a carrier frequency of said demodulated received RF signal.

2. The method according to claim 1, wherein said demodulated received RF signal comprises a primary synchronization channel (PSC) code for wideband code division multiple access (WCDMA).

3. The method according to claim 1, comprising rotating said carrier frequency of said demodulated received RF signal in a I and Q coordinate system thereby generating said at least one other carrier frequency.

4. The method according to claim 1, comprising generating a correlation result for each of said plurality of correlators and comparing said correlation results to determine said frequency error of said demodulated received RF signal.

5. The method according to claim 1, comprising adjusting a VCO frequency in response to said frequency error.

6. A machine-readable storage having stored thereon, a computer program having at least one code section for signal error in a communication system, the at least one code section being executable by a machine for causing the machine to determine a frequency error of a demodulated received RF signal utilizing a plurality of correlators, wherein at least one of said plurality of correlators is fed with a carrier frequency that is different from a carrier frequency of said demodulated received RF signal.

7. The machine-readable storage according to claim 6, wherein said demodulated received RF signal comprises a primary synchronization channel (PSC) code for wideband code division multiple access (WCDMA).

8. A system for estimating signal error in a communication system, the system comprising circuitry for determining a frequency error of a demodulated received RF signal utilizing a plurality of correlators, wherein at least one of said plurality of correlators is fed with a carrier frequency that is different from a carrier frequency of said demodulated received RF signal.

9. The system according to claim 8, wherein said received demodulated RF signal comprises a primary synchronization channel (PSC) code for wideband code division multiple access (WCDMA).

10. The system according to claim 8, comprising circuitry for rotating said carrier frequency of said demodulated received RF signal in a I and Q coordinate system thereby generating said at least one other carrier frequency.

Fig. 1

Fig. 2

EP 1 901 516 A2

Fig. 3

EP 1 901 516 A2

400

Coefficient Generator

(M,N)

401

Index Synthesizer
$F_{index}=RefClk*M/N$

Index

402

Sin/Cos Lookup

Cos(Ang)

Sin(Ang)

403

I/Q Data

404

| 2 KHz | 4 KHz | 10 KHz | 20 KHz |
|-------|-------|--------|--------|
| 0 | 1 | 2 | 3 |

Inc/Dec    $Clk_{Ref}$

I/Q Data

Ang

| | |
|---|------------|
| 0 | 0.0 deg |
| 1 | 2.5 deg |
| 2 | 5.0 deg |
| | |
| 33 | 40.0 deg |
| 34 | 42.5 deg |
| 35 | 45.0 deg |

Fig. 4

Freq — Fvco    Fc

Fig. 5a

Freq — Fc    Fvco

Fig. 5c

Q

Direction of rotation

I

Fig. 5b

Q

Direction of rotation

I

Fig. 5d

Fig. 5

**PSYNC Correlator**

I/Q Data → 15 (I,Q) → [Envelope Detection] 601 → 8 → [IIR] 602 → 12 → [Truncate] 603 → 8 → [Reporting Function] 604 → P_MAX

[IIR] ↔ 12 ↔ [Buffer] 605 ↔ 12

[Truncate] 603 → [IIR Noise-Floor] 606 → P_N

Fig. 6

600

Fig. 7